# EUROPÄISCHE PATENTANMELDUNG

(11) **EP 0 933 622 A2**
(43) Veröffentlichungstag der Anmeldung: **04.08.1999**
(21) Anmeldenummer: 99100619.8
(22) Anmeldetag: 14.01.1999
(51) Int. Cl.: G01H 1/00

(54) **Verfahren zur schwingungsdiagnostischen Überwachung rotierender Maschinen, insbesondere Pumpspeichersätzen in Wasserkraftwerken**

(30) Priorität: 03.02.1998 DE 19803956
(71) Anmelder: SCHENCK VIBRO GmbH, 64293 Darmstadt (DE)
(72) Erfinder: Weigel, Manfred, Dr., 46846 Gross-Zimmern (DE); Zöller, Rolf, Dr., 64293 Darmstadt (DE); Reine, Frank, Dr., 64293 Darmstadt (DE); Schmid, Hansjörg, Dr., 6060 Hall (AT)
(74) Vertreter: Behrens, Helmut, Dipl.-Ing.

(57) **Zusammenfassung**

Bei einem Verfahren zur schwingungsdiagnostischen Überwachung rotierender Maschinen, insbesondere Pumpspeichersätzen von Wasserkraftwerken, werden zur schwingungsdiagnostischen Überwachung der transienten Übergänge zwischen den stationären Betriebsregimen für jedes Betriebsregime individuell den Referenzzustand beschreibende Kenngrößen (19) gebildet, die den zeitlichen Verlauf der Schwingungssignale charakterisieren und durch eine Beurteilung der zeitlich veränderlichen Kenngrößen (19) während des jeweiligen Betriebsregimes wird anschließend ein Überwachungsband (20, 21) ermittelt und weiterhin werden die aktuellen Kenngrößen ermittelt und der Maschinenzustand wird aus der Übereinstimmung der aus dem zu überwachenden Zustand gebildeten Kenngrößen mit dem entsprechenden den Referenzzustand charakterisierenden Kenngrößen (19) und daraus ermittelten Überwachungsband (20, 21) abgeleitet.

## Beschreibung

Die Erfindung betrifft ein Verfahren zur schwingungsdiagnostischen Überwachung rotierender Maschinen, insbesondere Pumpspeichersätzen in Wasserkraftwerken gemäß dem Oberbegriff des Patentanspruchs 1.

Die Hauptaufgabe eines Verfahren zur schwingungsdiagnostischen Überwachung des Zustandes von rotierenden Maschinen besteht darin, möglichst ohne Betriebsunterbrechung eine Beurteilung des aktuellen Maschinenzustandes, der Belastung der Maschine und jegliche Veränderungen des Maschinenzustandes zu liefern, wobei durch Analyse der diagnostisch relevanten Meßgrößen, insbesondere der Schwingungssignale eine Fehlerdiagnose ermöglicht wird. In die Beurteilung des Maschinenzustandes werden zusätzlich Betriebsparameter wie Drehzahl, Leistung, Erregerstrom, Temperatur, Drücke und andere Parameter einbezogen.

Ein derartiges Verfahren ist aus der Druckschrift "VIBROCAM 5000, Das System zur diagnostischen Überwachung von Turbomaschinen, C081, der Carl Schenck AG" bekannt, das speziell für die Gruppe von Turbomaschinen und besonders für den Einsatz an Dampfturbosätzen, Wasserkraftmaschinen, Gasturbinen, Turbopumpen und Turboverdichtern geeignet ist.

Rotoren von Turbomaschinen bilden zusammen mit den Gleitlagern und dem elastischen Fundament ein komplexes Feder-Masse-System. Das Schwingungsverhalten hängt stark vom Betriebsregime, von der Betriebsart, dem Betriebszustand und den Aufstellungsbedingungen der Maschine ab, so daß für jede einzelne Meßstelle jeder Maschine betriebszustands- und betriebsartsabhängige, individuelle Kenngrößen ermittelt und zur Beurteilung herangezogen werden müssen.

Unter Betriebsart versteht man die prinzipiell zu unterscheidenden Modi der Maschine, wie z.B. Kochlauf, Normalbetrieb und Abfahren. Ein Betriebsregime unterscheidet innerhalb einer Betriebsart unterschiedliche Arbeitsweisen wie z.B. Turbinenbetrieb, Pumpenbetrieb und Phasenschieberbetrieb bei Pumpspeichersätzen. Der Betriebszustand wird durch die Werte der Betriebsparameter in den Betriebsregimen charakterisiert.

Veränderungen im Schwingungsverhalten können z.B. durch Abnutzungen und Schäden, Überlastungen und Verformungen, durch Störungen in der normalen Betriebsweise und durch Einflüsse aus dem elektrischen Netz verursacht werden. Die Ursachen von Schwingungen werden dabei im wesentlichen nach ihren Erscheinungsmerkmalen charakterisiert. Den höchsten Informationsgehalt haben dabei die Frequenzen der dominierenden Signalanteile im Schwingungsspektrum und die Frequenzen der Signalanteile, bei denen Änderungen auftreten.

Bei dem bekannten Verfahren schwingungsdiagnostischer Überwachung erfolgt zunächst eine Erfassung der Schwingungssignale, der Betriebs- und Prozeßparameter beim jeweiligen Betriebsregte und Betriebszustand, sowie eine Frequenzanalyse und Bildung von Kenngrößen, die das Schwingungsverhalten und seine Änderung charakterisieren. Anschließend wird in einer Lernphase der Normalbereich und das Normalverhalten der selektiven Kenngrößen im Schwankungsbereich der Betriebs-/Prozeßparameter für alle Betriebsregime und Betriebszustände ermittelt. In dem nachfolgenden Schritt erfolgt dann ein Grenzwertvergleich der aktuellen selektiven Kenngrößen mit den Kenngrößen des Normalzustandes, so daß gegebenenfalls Alarme ausgelöst bzw. sich anbahnende kritische Maschinenzustände rechtzeitig signalisiert werden können.

Dieses bekannte Verfahren zur schwingungsdiagnostischen Überwachung von Turbomaschinen, insbesondere Pumpspeichersätzen ist zur Überwachung der transienten Betriebsregime jedoch nur bedingt einsetzbar.

Aufgabe der vorliegenden Erfindung ist es daher, ein Verfahren zu schaffen, das transiente Betriebsregime von rotierenden Maschinen, insbesondere von Pumpspeichersätzen in Wasserkraftwerken, automatisch überwacht und Änderungen des Maschinenzustandes erkennen kann.

Diese Aufgabe wird dadurch gelöst, daß zur schwingungsdiagnostischen Überwachung der transienten Übergänge zwischen den stationären Betriebsregimen für jedes Betriebsregime individuell den Referenzzustand beschreibende Kenngrößen gebildet werden, die den zeitlichen Verlauf der Schwingungssignale charakterisieren und durch eine Beurteilung dieser zeitlich veränderlichen Kenngrößen während des jeweiligen Betriebsregimes ein Überwachungsband ermittelt wird und anschließend die aktuellen Kenngrößen ermittelt werden und der Maschinenzustand aus der Übereinstimmung der aus dem zu überwachenden Zustand gebildeten Kenngrößen mit dem entsprechenden den Referenzzustand charakterisierenden Kenngrößen und daraus ermittelten Überwachungsband abgeleitet werden kann.

Durch Kenngrößen, die den zeitlichen Verlauf der Schwingungsmeßsignale charakterisieren und die Bildung von entsprechenden Überwachungsschläuchen für die jeweiligen transienten Betriebsregime wird eine Überwachung von transienten Übergängen zwischen den stationären Betriebsregime auch unter Echtzeitbedingungen möglich.

Das erfindungsgemäße Verfahren wird in einem Ausführungsbeispiel beschrieben, das in den Zeichnungen dargestellt ist.

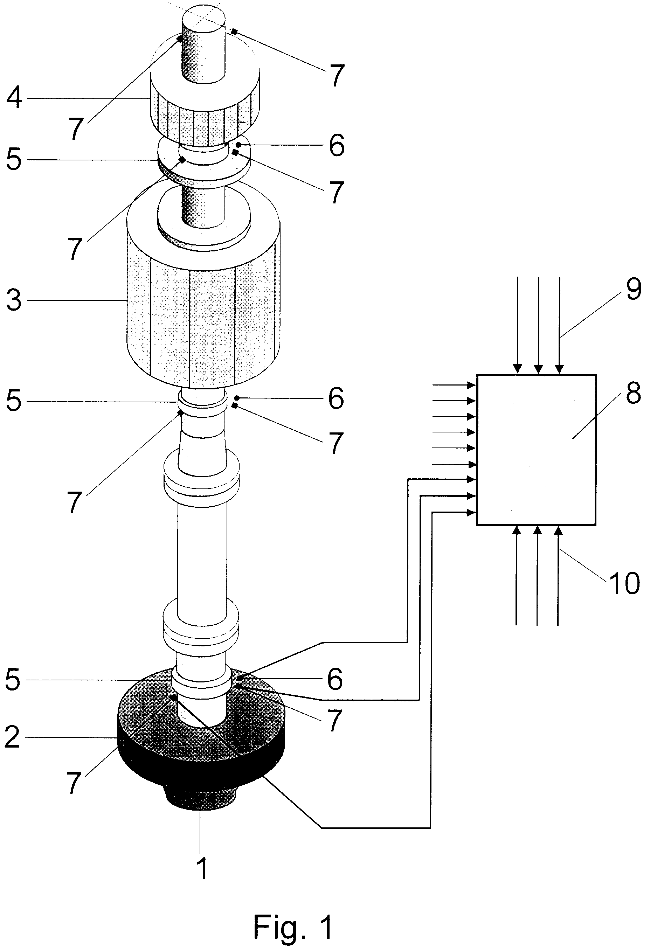

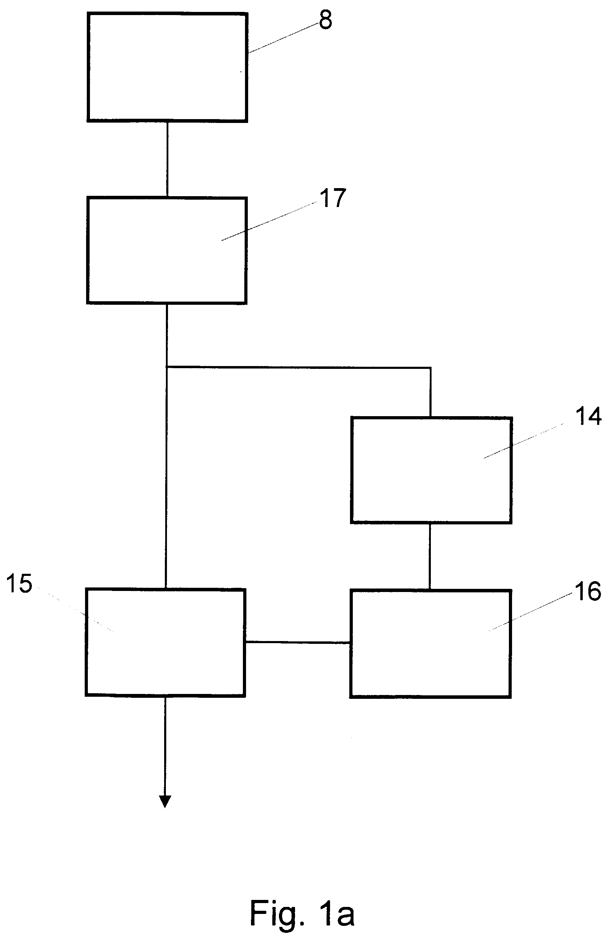

Fig. 1 zeigt eine schematische Darstellung der Meßwerterfassung an einem Wellenstrang eines Pumpspeichersatzes bestehend aus Turbinenlaufrad, Generatorläufer, Anfahrmotorläufer und den entsprechenden Lagerstellen;
Fig. 1 a zeigt schematisch das erfindungsgemäße Verfahren zur schwingungsdiagnostischen Überwachung anhand eines Ablaufschemas;
Fig. 2 a, b, c, d zeigen gemessene Schwingungssignalverläufe an vier Lagerstellen;
Fig. 3 zeigt ein Kaskadenspektrum für den Schwingungsignalverlauf gemäß Fig. 2a;
Fig. 4a zeigt schematisch die Ermittlung der Kenngrößen aus den Schwingungssignalen und die Ermittlung des Überwachungsbandes;
Fig. 4b zeigt eine weitere Möglichkeit zur Ermittlung eines Überwachungsbandes;
Fig. 4c zeigt eine weitere Möglichkeit zur Ermittlung eines Überwachungsbandes.

Die vorliegende Erfindung wird anhand der schwingungsdiagnostischen Überwachung der transienten Betriebsregime von Pumpspeichersätzen in Wasserkraftwerken näher erläutert.

An dem in Fig. 1 schematisch dargestellten Wellenstrang 1 eines Pumpspeichersatzes sind Turbinenlaufrad 2, Generatorläufer 3, Anfahrmotorläufer 4 mit den entsprechenden Lagerstellen 5: Turbinenlager, unteres Generatorlager, Traglager, oberes Generatorlager und Anfahrmotorlager dargestellt. Den Lagerstellen 5 sind jeweils Sensoren 6 zur Ermittlung der absoluten Lagerschwingungen zugeordnet. Zusätzliche Sensoren 7 sind an weiteren Meßstellen des Wellenstranges 1 zur Ermittlung der relativen Wellenschwingung angeordnet. Die an den Meßstellen über die Sensoren 6, 7 ermittelten Schwingungssignale werden an eine Meßwerterfassungseinheit 8 weitergeleitet.

Zusätzlich werden Steuersignale, die binär oder kontinuierlich sein können (dargestellt durch Pfeile 9), der Meßwerterfassungseinheit 8 zugeführt. Im Ausführungsbeispiel werden binäre Steuersignale bereitgestellt. Aus den Steuersignalen kann die Steuerung der Messung der transienten Betriebsregime abgeleitet werden. Diese Signale werden für jeden Typ der transienten Betriebsregime bereitgestellt, sie beschreiben im Ausführungsbeispiel den Beginn des jeweiligen Regimes. Sie können zudem herangezogen werden, um den zeitlichen Verlauf der Übergänge zwischen zwei stationären Betriebsregimen zu erfassen.

Als transiente Betriebsregime werden bei Pumpspeichersätzen die Übergangszustände zwischen den stationären Betriebsregimen, Turbinenbetrieb, Pumpenbetrieb, Phasenschieberbetrieb in Turbinendrehrichtung und Phasenschieberbetrieb in Pumpendrehrichtung und dem Maschinenstillstand verstanden.

Als weitere Meßgrößen werden zusätzlich geeignete Signale für Betriebsparameter gemessen, die auch als DC-Meßsignale bezeichnet werden. Geeignete Betriebsparameter für die Beurteilung transienter Betriebsregime von Pumpspeichersätzen in Wasserkraftwerken sind z. B. Leitradstellung, Laufradstellung, Wirkleistung, Oberwasserdruck, Unterwasserdruck und Kugelschieberstellung. Diese Betriebsparameter werden ebenfalls an die Meßwerterfassungseinheit 8 weitergeleitet, in der die gemessenen Signale aufbereitet werden (dargestellt durch Pfeile 10).

Fig. 1a zeigt schematisch das erfindungsgemäße Verfahren zur schwingungsdiagnostischen Überwachung anhand eines Ablaufschemas. Dargestellt sind die Meßwerterfassungseinheit 8, eine Kenngrößenbildungseinheit 17, eine Grenzwertbildungseinheit 14, eine Datenbank 16 und eine Grenzwertvergleichseinheit 15.

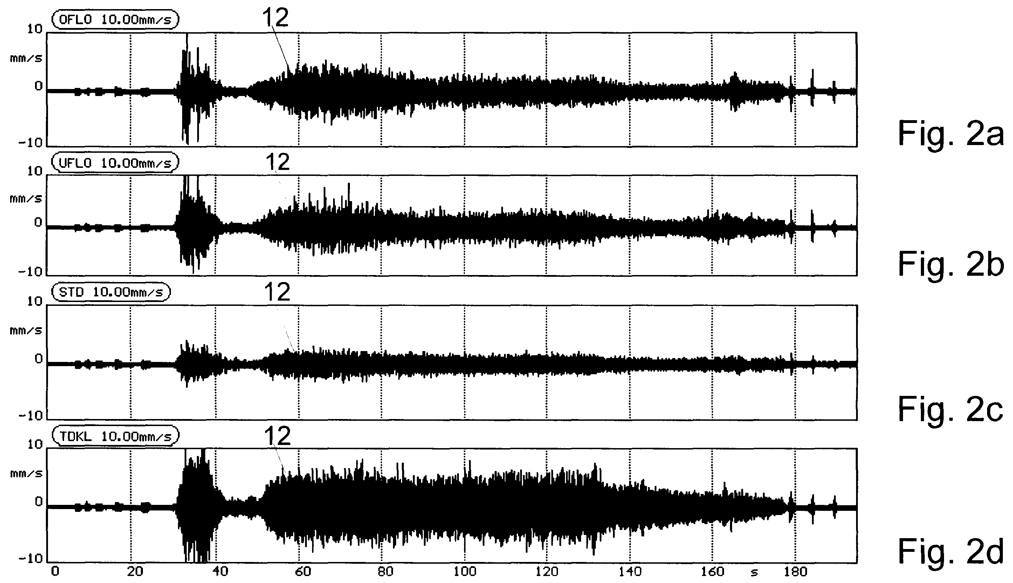

Die Fig. 2a, b, c, d zeigen eine Beispieldarstellung für die gemessenen Schwingungssignalverläufe 12 an vier Lagerschwingungsmeßstellen während des Überganges vom Stillstand in den Turbinenbetrieb und anschließend gleich in den Phasenschieberbetrieb.

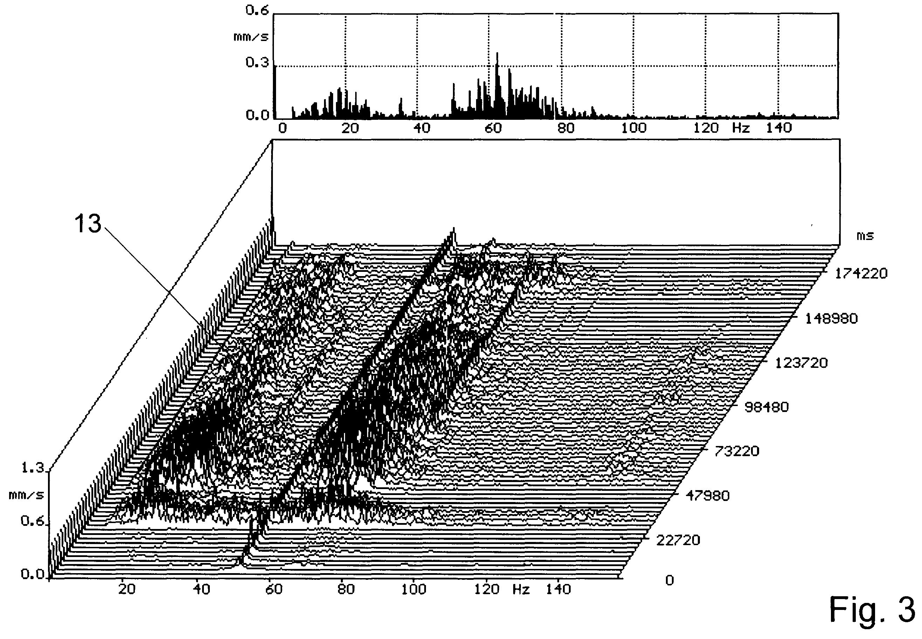

Fig. 3 zeigt ein Beispiel für die Darstellung eines Kaskadenspektrums 13 für den in der Fig. 2 a dargestellten Signalverlauf mit Flächenschnitt in der Zeitachse. Die Kaskadendarstellung 13 der Frequenzspektren für den Zeitraum des instationären Betriebsregimes läßt die äußerst komplexe Struktur der Schwingungssignale im Frequenzbereich erkennen. Aus diesem Grund erfolgt die Übervachung durch das erfindungsgemäße Verfahren im Zeitbereich.

Grundlage des erfindungsgemäßen Verfahrens zur diagnostischen Überwachung von Pumpspeichersätzen in Wasserkraftwerken ist zunächst die Lernphase. In der Lernphase werden mittels geeigneter Auswerteverfahren zunächst mehrere Kenngrößen für die Charakterisierung und Beurteilung der jeweiligen transienten Betriebsregime ermittelt, die ein Normalverhalten für die zu überwachenden transienten Betriebsregime repräsentieren.

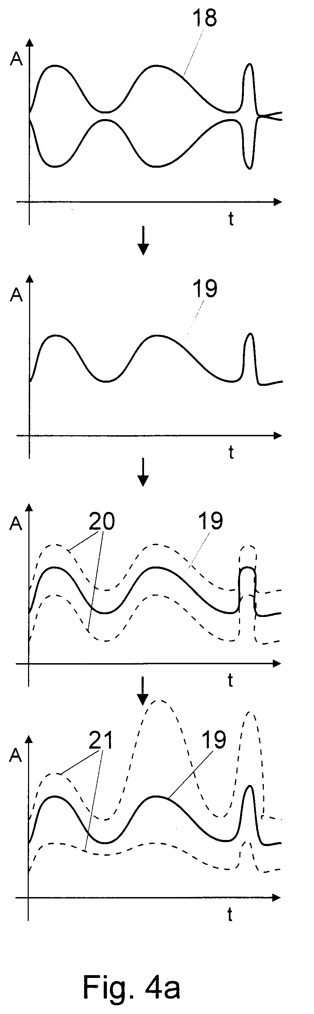

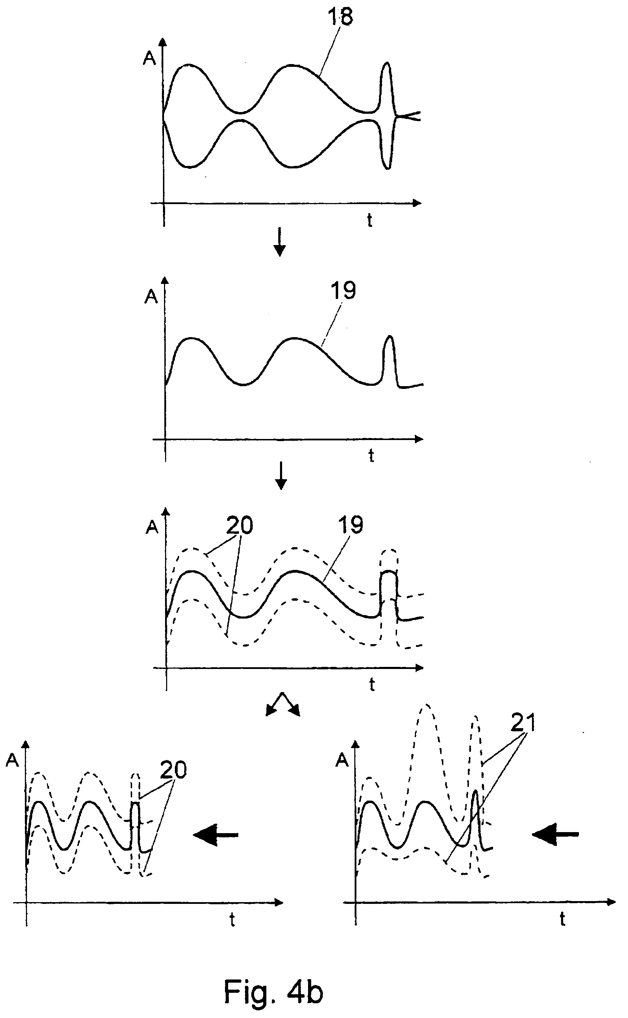

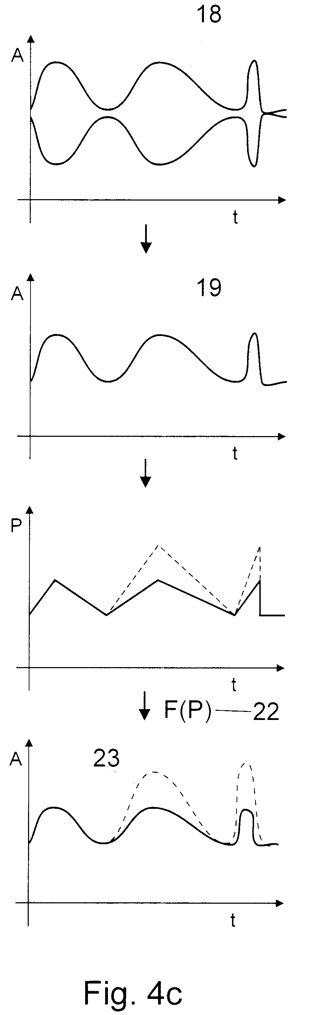

In den Figuren 4a, b, c ist das in mehreren Stufen aufgegliederte Verfahren zur schwingungsdiagnostischen Überwachung im Zeitbereich in unterschiedlichen Varianten dargestellt.

Für die jeweiligen transienten Betriebsregime erfolgt in einem ersten Schritt zunächst die Auswahl eines Referenzvorganges für den Normalzustand oder die Bildung des Referenzvorganges auf statistischer Basis aus mehreren wählbaren gleichartigen Vorgängen.

Zur Ermittlung der Kenngrößen werden die über die Zeitdauer des jeweiligen transienten Betriebsregimes gemessenen diagnostisch relevanten Meßgrößen, insbesondere die Schwingungssignale, von der Meßwerterfassungseinheit 8 der Kenngrößenbildungseinheit 17 zugeführt. Eine schematische Darstellung der Hüllkurve eines gemessenen Schwingungssignalverlaufes 18 ist im ersten Bild der Fig. 4a, 4b, 4c dargestellt. Aus den aufbereiteten Schwingungssignalen erfolgt in einem zweiten Schritt die Berechnung des zeitlichen Verlaufes der die transienten Betriebsregime charakterisierenden Kenngrößen. Im Ausführungsbeispiel erfolgt die Berechnung des Kurzzeitspitzenwertes für den Referenzvorgang über ein gleitendes Zeitfenster. Anstelle der Berechnung des zeitlichen Verlaufes des Kurzzeitspitzenwertes könnte beispielsweise auch der Kurzzeiteffektivwert oder die Küllkurve zur Berechnung der Kenngrößen herangezogen werden. Im darauffolgenden zweiten Bild der Fig. 4a, 4b, 4c ist der Kurzzeitspitzenwert 19 dargestellt.

Die so ermittelten Kenngrößen werden anschließend der Grenzwertbildungseinheit 14 zugeführt. Dort erfolgt im dritten Schritt die Approximation des zeitlichen Verlaufes des Kurzzeitspitzenwertes innerhalb einer Vielzahl von zeitlichen Abschnitten durch Polynome (z. B. 4. Grades). Durch die Polynombildung wird eine Datenreduzierung im Verhältnis (Abtastwerte im Intervall) : (Polynomgrad + 1) erreicht.

In einem darauffolgenden vierten Schritt erfolgt die Differenzbildung zwischen den Polynomverläufen und den Meßwerten des Referenzvorganges für den Normalzustand und daraus eine Berechnung der Standardabweichung für jedes Zeitfenster.

In einem fünften Schritt erfolgt die Ermittlung des Überwachungsbandes für jedes Zeitfenster, d. h. die Berechnung der jeweiligen Bänder im konstanten Abstand +/- ki zu den Polynomverläufen des Referenzvorganges. Die Konstanten ki entsprechen dabei der n-fachen jeweiligen Standardabweichung. Der Faktor n wird aus der statistischen Sicherheit berechnet (Hypothesentest). Die statistische Sicherheit ist der Parameter, der für die Überwachung vorzugeben ist. Durch sie wird bestimmt, welcher Prozentsatz der Meßwerte bei der folgenden Überwachung im Überwachungsband liegen muß und ist u. a. abhängig vom jeweiligen Maschinentyp und dem jeweiligen Betriebregime.

Der in der Grenzwertbildungseinheit 14 ermittelte Überwachungsband des Referenzvorganges jedes transienten Betriebsregimes wird als Grenzwert in einer Datenbank 16 abgelegt.

In dem sechsten Schritt erfolgt die Überwachung des aktuellen transienten Betriebsregimes durch die Ermittlung einer statistisch signifikanten Aussage. Dies geschieht durch einen Vergleich der in der Datenbank 16 abgelegten ermittelten Bänder zu den Polynomverläufen des Referenzvorganges mit den aktuellen, in der Kenngrößenbildungseinheit 17 ermittelten Kenngrößen des zu überwachenden transienten Betriebsregimes in der Grenzwertvergleichseinheit 15.

Die Änderung des Maschinenzustandes wird dann aus der Übereinstimmung der aus dem zu überwachenden Zustand gebildeten Kenngrößen mit dem entsprechenden den Referenzzustand charakterisierenden Kenngrößen und daraus ermittelten Übervachungsband quantifiziert.
In Abhängigkeit von den Betriebsparametern sind die folgenden während der Überwachung von Pumpspeichersätzen auftretenden Fälle zu unterscheiden:

*Im* Fall A sind die zeitlichen Verläufe der Betriebsparameter (z. B. Drehzahl, Leitradstellung, Kugelschieberöffnung usw.) für die jeweiligen Betriebsregime immer gleich bzw. näherungsweise gleich oder nicht bekannt (Fig. 4a).

Bei Vorliegen von Fall A wird im einfacheren Fall im vorgenannten dritten Schritt ein festes Intervall um die Polynomverläufe als Grenzwert vergeben. Dies sind Bänder (Hüllen) 20 um den ermittelten Merkmalsverlauf 19. Im komplexeren Fall werden die Grenzwerte gemäß der weiteren bereits beschriebenen Schritte 4 und 5 ermittelt und sind Bänder (Hüllen) 21 um den ermittelten Merkmalsverlauf 19, die aus statistischen Vorgaben berechnet werden. Die Grenzwertfestlegung erfolgt in Abhängigkeit von einer vorgegebenen Standardabweichung auf der Basis einzelner Schwingungssignalverläufe oder mehreren statistisch gemittelten Verläufen (unteres Bild Fig. 4a).

*Im* Fall B sind die zeitlichen Verläufe der Betriebsparameter unterschiedlich und bekannt und haben einen Einfluß auf den zeitlichen Verlauf der Schwingungssignale (Fig. 4b, c).

Bei Vorliegen von Fall B sind die Grenzen um die Polynomverläufe im vorgenannten dritten Schritt variabel und werden unter Berücksichtigung der gemessenen Betriebsparameter festgelegt. Hier erfolgt im einfacheren Fall eine Anpassung durch das zeitliche Strecken bzw. Stauchen der Bänder. Dies ist in Fig. 4b schematisch dargestellt.

Im komplexeren Fall (Fig. 4c) besteht die Möglichkeit der Anpassung des Merkmalsverlaufs 19 durch Modellierung des zeitlichen Zusammenhangs zwischen Betriebsparametern und Schwingungssignalen mit einem möglicherweise nichtlinearen Modell 22. Das Ergebnis der Anpassung des Merkmalsverlaufs wird im unteren Bild von Fig. 4c als gestrichelte Kurve 23 dargestellt. Die Ermittlung des Überwachungsbandes erfolgt anschließend wie in Schritt 4 und 5 beschrieben.

## Patentansprüche

1. Verfahren zur schwingungsdiagnostischen Überwachung rotierender Maschinen, insbesondere Pumpspeichersätzen von Wasserkraftwerken, bei dem Schwingungssignale und Betriebsparameter gemessen und anschließend aufbereitet werden, wobei charakterisierende Kenngrößen für die Betriebsregime unter Berücksichtigung der Schwingungssignale und der Betriebsparameter gebildet werden, die das Normalverhalten der Maschine repräsentieren und einen Referenzzustand beschreiben, und anhand der Kenngrößen Grenzwerte ermittelt und abgespeichert werden und anschließend ein Grenzwertvergleich zwischen den abgespeicherten Kenngrößen des Normalverhaltens und den aktuellen ermittelten Kenngrößen des Betriebsregimes erfolgt und daraus abgeleitet ein Maschinenzustand angezeigt werden kann, dadurch gekennzeichnet, daß zur schwingungsdiagnostischen Überwachung der transienten Übergänge zwischen den stationären Betriebsregimen für jedes Betriebsregime individuell den Referenzzustand beschreibende Kenngrößen (19) gebildet werden, die den zeitlichen Verlauf der Schwingungssignale charakterisieren und durch eine Beurteilung der zeitlich veränderlichen Kenngrößen (19) während des jeweiligen Betriebsregimes ein Überwachungsband (20, 21) ermittelt wird und anschließend die aktuellen Kenngrößen ermittelt werden und der Maschinenzustand aus der Übereinstimmung der aus dem zu überwachenden Zustand gebildeten Kenngrößen mit dem entsprechenden den Referenzzustand charakterisierenden Kenngrößen (19) und daraus ermittelten Überwachungsband (20, 21) abgeleitet werden kann.

2. Verfahren zur schwingungsdiagnostischen Überwachung rotierender Maschinen, insbesondere Pumpspeichersätzen von Wasserkraftwerken nach Patentanspruch 1, dadurch gekennzeichnet, daß zur Berechnung der Kenngrößen (19) der zeitliche Verlauf des Kurzzeitspitzenwertes, des Kurzzeiteffektivwertes oder die Hüllkurve herangezogen werden.

3. Verfahren zur schwingungsdiagnostischen Überwachung rotierender Maschinen, insbesondere Pumpspeichersätzen von Wasserkraftwerken nach Patentanspruch 1 oder 2, dadurch gekennzeichnet, daß eine Approximation des zeitlichen Verlaufes der Kenngrößen (19) innerhalb einer Vielzahl von zeitlichen Abschnitten durch Polynome erfolgt, anschließend eine Differenzbildung zwischen den Polynomverläufen und den Meßwerten des Referenzvorganges für den Normalzustand und daraus eine Berechnung der Standardabweichung für jedes Zeitfenster erfolgt.

4. Verfahren zur schwingungsdiagnostischen Überwachung rotierender Maschinen, insbesondere Pumpspeichersätzen von Wasserkraftwerken nach einem der vorhergehenden Ansprüche, dadurch gekennzeichnet, daß die Bewertung der zeitlich veränderlichen Kenngrößen (19) zur Ermittlung der Übervachungsschläuche durch Bewertung der statistischen Verteilung erfolgt.

5. Verfahren zur schwingungsdiagnostischen Überwachung rotierender Maschinen, insbesondere Pumpspeichersätzen von Wasserkraftwerken nach Patentanspruch 3, dadurch gekennzeichnet, daß ein festes Intervall um die Polynomverläufe vergeben wird.

6. Verfahren zur schwingungsdiagnostischen Überwachung rotierender Maschinen, insbesondere Pumpspeichersätzen von Wasserkraftwerken nach Patentanspruch 3, dadurch gekennzeichnet, daß die Grenzen um die Polynomverläufe variabel sind und unter Berücksichtigung des gemessenen zeitlichen Verlaufes der Betriebsparameter festgelegt werden.

7. Verfahren zur schwingungsdiagnostischen Überwachung rotierender Maschinen, insbesondere Pumpspeichersätzen von Wasserkraftwerken nach einem oder mehreren der vorgenannten Patentansprüche, dadurch gekennzeichnet, daß der Beginn der jeweiligen transienten Betriebsregime aus binären Steuersignalen (9) abgeleitet werden kann.

8. Verfahren zur schwingungsdiagnostischen Überwachung rotierender Maschinen, insbesondere Pumpspeichersätzen von Wasserkraftwerken nach einem oder mehreren der vorgenannten Patentansprüche, dadurch gekennzeichnet, daß für jedes Betriebsregime individuell den Referenzzustand beschreibende Kenngrößen (19) in einer Lernphase gebildet werden.
